# EUROPEAN PATENT SPECIFICATION

(11) **EP 2 997 701 B1**
(45) Date of publication and mention of the grant of the patent: **14.11.2018**
(21) Application number: 13780196.5
(22) Date of filing: 10.08.2013
(51) Int. Cl.: H04L 12/24, H04L 12/755

(54) **NETWORK STATE DIGEST FOR CONVERGENCE CHECK**
NETZWERKZUSTANDSÜBERSICHT FÜR KONVERGENZPRÜFUNG
SYNTHÈSE D'ÉTAT DE RÉSEAU POUR VÉRIFICATION DE CONVERGENCE

(30) Priority: 13.05.2013 US 201361822719 P
(43) Date of publication of application: 23.03.2016
(73) Proprietor: Telefonaktiebolaget LM Ericsson (publ), 164 83 Stockholm (SE)
(72) Inventor: CSÁSZÁR, András, 2089 Telki (HU); FARKAS, János, 6000 Kecskemét (HU); KERN, András, 1118 Budapest (HU)
(74) Representative: Ericsson
(86) International application number: PCT/IB2013/056539
(87) International publication number: WO 2014/184624

(56) References cited:
- WO-A2-2009/112929
- US-A1- 2009 180 400
- US-B1- 7 839 891
- MOY ASCEND COMMUNICATIONS J ET AL: "OSPF Version 2; rfc2328.txt", 19980401, 1 April 1998 (1998-04-01), XP015008112, ISSN: 0000-0003

## Description

### CROSS-REFERENCE TO RELATED APPLICATIONS

This application claims the benefit of U.S. Provisional Application No. 61/822,719, filed May 13, 2013.

### Field

The present disclosure relates generally to link state protocols for packet-switched communication networks and, more particularly, to use of a network state digest for verifying that a switching network has finished converging into a new stable routing state.

### Background

There is no solution available for determining whether a network controlled by a distributed routing protocol has converged into a stable routing state. Link-state control, such as the Intermediate System to Intermediate System (IS-IS) or the Open Shortest Path First (OSPF), are state of the art distributed protocols that are most often used for the control of data packet routing and forwarding within a network domain. Each network node in the link state domain collects information on its adjacent neighbors by exchanging "Hello" Protocol Data Unit (PDU) messages with its neighbors. The network nodes in the link state domain then distribute the information on their neighbors by means of flooding link state messages. Each network node in the link state domain maintains a topology database that provides a "map" of the network. Using the network "map," each network node determines the path to each possible destination on its own, which is typically the shortest path computed by the Dijkstra algorithm often referred to as Shortest Path First (SPF). Each network node then sets a local forwarding entry to the port through which a given destination is reachable according to the result of the path computation. This mechanism ensures that there will be a shortest path between any node pairs.

Nevertheless, there is no parameter provided by the link-state protocols today that would indicate that the protocol has converged to another stable state after a change in the network (e.g., no further LSP propagation is going on). For instance, each network node has to have the same view on the network topology in a stable state in order to be able to install consistent forwarding states.

Today, at most adjacent neighbor nodes verify consistency on their view on the network topology. The Agreement Protocol (AP) loop prevention mechanism specified by the Institute of Electrical and Electronics Engineers (IEEE) 802.1aq Shortest Path Bridging (SPB) relies on checking the topology view between two adjacent neighbors. The Agreement Protocol defines a message object which is exchanged between adjacent neighbor nodes so that neighbor nodes can agree that they see the same topology. The intention is to summarize the key elements of the ISIS-SPB Link State Database (LSDB) in a manner which has an infinitesimal probability that two nodes with differing link state databases generate the same summary, i.e. digest. On the other hand, two nodes possessing the same topology view (i.e., LSDB) generate the same digest.

The Agreement Digest is exchanged in ISIS-SPB Hello PDUs between adjacent nodes, in which way a node can determine if its adjacent neighbor is in sync with itself in the sense that they see the same topology. In IEEE 802.1aq, the Agreement Digest is composed of two parts, the Agreement Digest Edge Count and Computed Topology Digest. The Agreement Digest Edge Count (16 bits) is an unsigned integer. Its purpose is to provide one component of the Agreement Digest, which is simple to compute and powerful in detecting many simple topology mismatches. This value is the sum modulo 216 of all Edges in the SPB topology. Each point-to-point physical link is counted as two Edges, corresponding to its advertisement by ISIS-SPB in an LSP flooded from either end of the link. If more than one ISIS-SPB topology is configured, the Agreement Digest Edge Count accumulates all Edges in all configured topologies. If Edges are absent in a particular topology, they have the value 0 for this summation.

The Computed Topology Digest is formed from the arithmetic sum of the individual MD5 hashes of the significant parameters of each Edge in the SPB Region. This strategy allows the Digest to be incrementally computed when the topology changes, by subtracting the signatures of vanished Edges from the Digest and adding the signatures of new Edges. In general, the signature of an Edge therefore needs only to be computed once, when it is first advertised.

Notably, the exchange of the Agreement Digest is link local and it is not propagated farther than the adjacent neighbor. The local exchange of the Agreement Digests is not synchronized, as they are independent to each other. There is no solution available today for determining whether a distributed protocol (e.g., a link-state protocol), controlling the routing in a network domain has already converged into a stable state or not. Thus it is also not possible to be aware that the forwarding paths have been already installed by the network nodes, or that they at least have the same view on the network topology.

The Agreement Protocol described above is the only protocol aiming for checking that two adjacent nodes are in agreement with respect to the view on the topology. Nevertheless, this check is strictly between two adjacent nodes, therefore the Agreement Protocol in its current form is not useful for determining that all nodes in the network have converged onto the new topology.

Document US 2009/180400 A1 may be construed to disclose a method of installing forwarding state in a link state protocol controlled network node having a topology database representing a known topology of the network, and at least two ports for communication with corresponding peers of the network node. A unicast path is computed from the node to a second node in the network, using the topology database, and unicast forwarding state associated with the computed unicast path installed in a filtering database (FDB) of the node. Multicast forwarding state is removed for multicast trees originating at the second node if an unsafe condition is detected. Subsequently, a "safe" indication signal is advertised to each of the peers of the network node. The "safe" indication signal comprises a digest of the topology database. A multicast path is then computed from the network node to at least one destination node of a multicast tree originating at the second node. Finally, multicast forwarding state associated with the computed multicast path is installed in the filtering database (FDB) of the network node, when a predetermined safe condition is satisfied.

Document WO 2009/112929 A2 may be construed to disclose a network node of a telecommunications network controlled by a link-state protocol including a network interface which receives a message that contains information on a change in topology of the network. The node includes a processing unit that blocks forwarding of traffic to at least one neighbor node of the network at the network interface, agrees on the change in topology with the neighbor node; and unblocks the forwarding of traffic when the neighbor node has information about the topology which is the same as the information about the topology in a memory. A transient loop prevention method of a network node of a network having a plurality of a network nodes controlled by a link-state protocol includes the steps of receiving a message at a network interface which contains information on a change in topology of the network. There is the step of blocking forwarding of traffic to each neighbor node of the network at the network interface by a processing unit. There is the step of agreeing by the processing unit on the change in topology with the neighbor node. There is the step of unblocking the forwarding of traffic when the neighbor node has information about the topology which is the same as the information about the topology stored in a memory.

### Summary

According to the invention, there are provided a method and an apparatus according to the independent claims. Developments are set forth in the dependent claims.

According to one example embodiment, a method is implemented by a network node to verify that a switching network has converged to a stable routing state. The network node receives a network state digest from each of a plurality of switching nodes in the switching network. Each network state digest is indicative of a topology of the switching network as perceived by a given switching node. The network node determines that the switching network has converged to a stable routing state based on a comparison of the received network state digests.

Thus, according to the embodiments descried above, a well-defined digest summary is prepared by each switching node on the currently perceived or installed network state (e.g., topology). All switching nodes then advertise (flood) the digest of their currently known or installed network state in link state descriptor packets. In IS-IS, the digest could be added to Link State PDUs (LSPs), while in OSPF the digest could be added to Router Link State Advertisements (LSA) for instance.

Flooding the network state digests into the network ensures that each node knows whether or not all other nodes have the same network state information. If there is one or more controlling entity, which is not part of the switching network domain but has access to the distributed control protocol, e.g. to its database or even receives the control PDUs, then the controlling entity (e.g., PCE or SDN controller) receives the control PDUs of the routing protocol in order to be always aware the state of the network (e.g., topology). Therefore, the external entities also receive the summary digest on network state from each individual network node. Hence, the external entities can be always aware of the actual status of the network by means of comparing the individual digests. The network is stable if each network node has sent identical digests.

Of course, the present disclosure is not limited to the above features and advantages. Indeed, those skilled in the art will recognize additional features and advantages upon reading the following detailed description, and upon viewing the accompanying drawings.

### BRIEF DESCRIPTION OF THE DRAWINGS

Fig. 1 illustrates an example communication network.
Fig. 2 illustrates an example method implemented by a network node of verifying that a switching network has converged to a stable routing state.
Fig. 3 illustrates an example method implemented by a switching node for enabling verification that a switching network has converged to a stable routing state.
Fig. 4 illustrates an example implementation of the method of Fig. 3.
Fig. 5 illustrates an example network state digest Type Length Value (TLV).
Fig. 6 illustrates another example network state digest TLV.
Fig. 7 illustrates an example network node.

### DESCRIPTION OF EMBODIMENTS

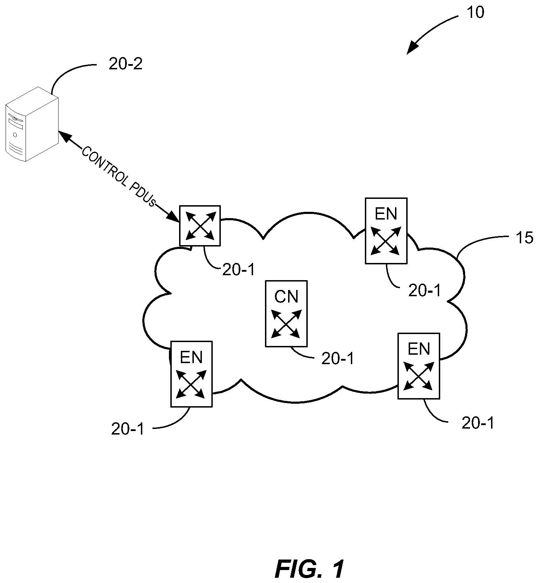

Referring now to the drawings, Fig. 1 illustrates an exemplary packet-switched communication network 10. The communication network 10 comprises a switching network 15 having a plurality of switching nodes 20-1, such as routers or switches, interconnected by communication links (not shown) for routing data traffic through the network 10 from a source to a destination. The communication network 10 may further include one or more external nodes 20-2, such as Path Computation Elements (PCEs) or network controllers for Software Defined Networks (SDNs) or Application-Based Network Operations (ABNO). A PCE controller is an external node 20-2 that determines a suitable route for conveying data traffic between a source and a destination. A network controller for a SDN network is an external node 20-2 that manages flow control to enable intelligent networking. SDN controllers are based on protocols, such as OpenFlow, that allow the SDN controller to tell switching nodes 20-1 in the switching network where to send packets. An ABNO controller governs network behavior in response to changing network conditions and in accordance with application network requirements and policies. The switching nodes 20-1 and external nodes 20-2 are referred to herein generically as network nodes 20. The communication network 10 may, for example, comprise an Internet Protocol (IP) network, Ethernet network, or other type of packet-switched network.

In exemplary embodiments of this disclosure, the communication network 10 uses a link state routing protocol, such as Open Shortest Path First (OPSF) or Intermediate System to Intermediate System (IS-IS), for calculating routes for forwarding of data packets or frames. Each network node 20 in the link state protocol domain maintains a link state database (LSDB) describing the topology of the communication network 10.

Link state protocols use a process known as flooding to synchronize the LSDBs maintained by each network node 20. When a network node 20 detects a change in the network topology or the state of a link, it generates and sends a link state advertisement to each of its neighbors. A network node 20 that receives a link state advertisement from a neighbor determines whether the link state advertisement contains a new or updated link state. If so, the receiving network node 20 updates its own LSDB and forwards the link state advertisement to its neighbors, except the one from which the link state advertisement message was received. The flooding process ensures that, within a reasonable time, all network nodes 20 will receive the link state advertisement and thus have the same LSDB. The LSDB provides each network node 20 with the same "map" of the network topology. Each network node 20 involved in packet routing and forwarding (i.e., each switching node), independently determines how to route packets through the network 10 based on this network map.

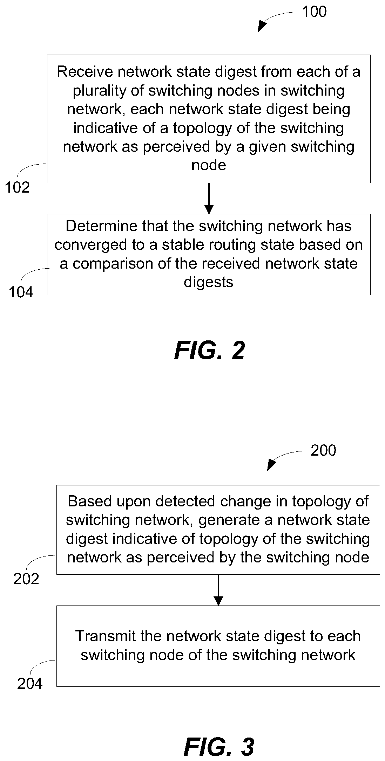

Fig. 2 illustrates an example method 100 implemented by a network node 20, of verifying that the switching network 15 has converged to a stable routing state. According to the method, the network node 20 receives (block 102) a network state digest from each of a plurality of switching nodes 20-1 in the switching network 15, with each network state digest being indicative of a topology of the switching network as perceived by a given switching node 20-1. The network node 20 determines (block 104) that the switching network has converged to a stable routing state based on a comparison of the received network state digests. In one or more embodiments this corresponds to the received network state digests indicating an identical network topology. The network node 20 at issue may be a switching node 20-1, or an external node 20-2, for example.

Fig. 3 illustrates an example method 200 implemented by a switching node 20-1 in a switching network 15, of enabling verification that the switching network 15 has converged to a stable routing state. The switching node 20-1 generates (block 202) a network state digest indicative of topology of the switching network 15 as perceived by the switching node, based upon a detected change in topology of the switching network 15. The switching node 20-1 transmits (block 204) the network state digest to each switching node 20-1 of the switching network 15 (e.g., using a flooding process).

### Network state digest

Network nodes, such as nodes 20-1 in Fig. 1 (where "CN" denotes center node and "EN" denotes an edge node) or external entities such as an external controller (20-2) hosting (e.g., a Path Computation Element (PCE)) may be of interest in the actual network state. Especially, whether or not the network has been stabilized after a transient event (e.g., any change in the network topology).

The network state digest reflects the actual network state perceived or implemented by a particular network node. One possible network state is the topology of the network. The network state digest then summarizes the actual view of a given node on the network. The digest is also referred to as a "topology digest," if the network state of interest is the topology of the network. Another possibility is that the network state is not only about the topology but it comprises further information as well (e.g., about the installed paths or reserved/available bandwidth).

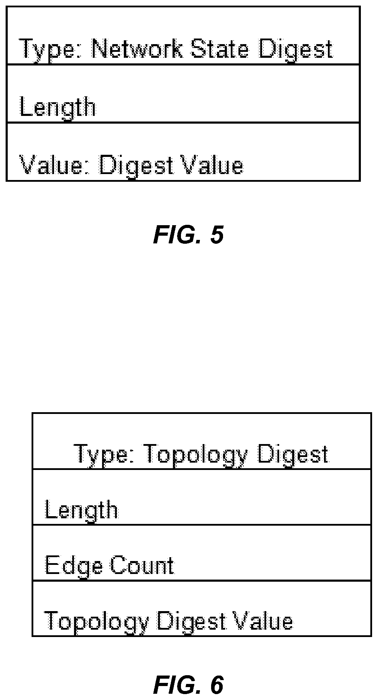

In all link state protocols, the network state digest is specified by a (sub) Type Length Value (TLV), e.g. as shown in Fig. 5. If the network state digest is a topology digest, then in addition to the digest value, it is useful to have the edge count too, as shown in Fig. 6.

### Determining the network state digest

The base of the network state digest has to be some data that is identical in the network nodes in case of stable network state. The link state database (LSDB) is identical at each node if the network is in a stable state. Therefore, the network state digest may be based on the entire LSDB or a subset of it.

Implementation possibilities of the network state digest are provided in the following for different applications of link-state routing.

### ISIS-SPB routed Ethernet network

If topology is the network state that matters with respect to network convergence, then the simplest case is to use the topology digest (Computed Topology Digest) specified in Clause 28.4.6 of IEEE 802.1aq. Note, however, that the topology digest is part of the Agreement Digest specified by 28.4, which is only exchanged between adjacent neighbors in "Hello" PDUs for loop prevention.

As opposed, in the method proposed here, the topology digest is carried in LSPs, and therefore it is flooded to all other nodes in the same region. Aside from the topology digest, it can also be useful to insert the edge count into the topology state flooded, like the Agreement Digest Edge Count (see Fig. 6).

If another type of network state is used, then the corresponding digest is inserted and flooded in the LSPs.

### IS-IS routed IP network

The digest could be formed from the arithmetic sum of the individual MD5 hashes of the significant parameters of each LSP in the same IS-IS level area. This strategy has the same benefits as the Computed Topology Digest in SPB (i.e., it allows the digest to be incrementally computed when the topology changes, by subtracting the signatures of vanished LSPs from the Digest and adding the signatures of new LSPs). In general, the signature of an LSP, therefore, needs only to be computed once.

Notably, the digest values in the LSPs are not included when calculating the MD5 hash of an LSP.

A link count value, similar to the Edge Count Digest of SPB Agreement Digest, can also be used.

### OSPF routed IP network

The digest could be formed from the arithmetic sum of the individual MD5 hashes of the significant parameters of each LSA in the same OSPF area. The own digest value and the digest values received from other routers are NOT to be included in the individual MD5 hash calculation.

A link count value, similar to the Edge Count Digest of SPB Agreement Digest, can also be used.

### Insert topology digest in a packet

The topology digest should be added as a new information element into the link state messages as shown in the below sections. The link state messages are propagated (flooded) as usual (i.e., no new mechanism is required).

### Ethernet: ISIS-SPB

The network state digest can be carried within a Multi-Topology Capability (MT-Capability) TLV, which is a top level TLV for Link State PDUs that provides Multi-Topology context. It identifies the Multi-Topology Identifier (MTID) for sub-TLVs in LSPs.

Note that the network state digest is carried in LSPs instead of Hello PDUs used for carrying the digest for loop prevention. The Agreement Digest used for loop prevention is included in an MT-Port-Cap TLV in SPB Hello PDUs (i.e., only exchanged between adjacent neighbors and not the same as the MT-Capability TLV flooded in LSPs).

If the topology if the network state of interest in an IS-IS controlled Ethernet network, then the SPB Digest sub-TLV (sub clause 28.12.3 of IEEE 802.1aq) can be added to the LSPs, (e.g., by means of adding this sub-TLV to the MT-Capability TLV).

Note that ISIS-SPB is an add-on to IS-IS. Therefore, the TLVs used for IS-IS to carry the digest can be also used for ISIS-SPB.

### IP: IS-IS

In this embodiment, the network state digest should be created in a new (sub) Type Length Value (TLV) advertised by routers. The TLV, along many others describing links and other properties, will be included in an LSP.

### IP: OSPF

The network state digest could be put in a new Type-Length-Value (TLV) advertised in a Router LSA.

Another option would be to create a new Opaque LSA type where to insert this TLV. Opaque LSA has the advantage that nodes transparently flood it even if they do not understand the contents. This property is less of use, since the intention is to get the digest from all nodes, meaning that in this embodiment all nodes should support this Opaque LSA.

### When to originate a network state digest

A network state digest should be originated when certain conditions are fulfilled. The main condition is that the digest is originated when an LSP/LSA is received that contains information on a change in the part of the network state which covered by the digest. However, the exact timing of the origination of the network state digest depends on what it exactly aims to indicate. For example, an LSA/LSP containing the network state digest could be originated directly after becoming aware of the change, if the intention is to indicate the network view of the node. If the topology is the network state of interest, then each node floods an LSP carrying the digest on the topology view of then node after a change in the topology.

It may be worthwhile, though, to wait with origination. Similarly to traditional Interior Gateway Protocol (IGP) behaviour with respect to path computation, in one or more embodiments a newly received LSA/LSP does not immediately trigger shortest path calculation, and does not trigger immediate further forwarding of the received information. A timer is used during which further topology change information may be received. Similarly, the origination of the network state digest may be delayed with a Digest Hold Timer, the value of which should be configurable.

Alternatively, the origination of the digest may actually wait for the successful installation of the received information into the forwarding system of a node, such as when the path calculation and Forwarding Information Base (FIB) / Filtering Database (FDB) updates have successfully concluded. The origination of the digest could also be sent after such a confirmation from the forwarding system is received, since this is really the time instance when the changed topology is really in effect. The digest then also indicates that the states have been installed by the node corresponding to the network state reflected in the digest.

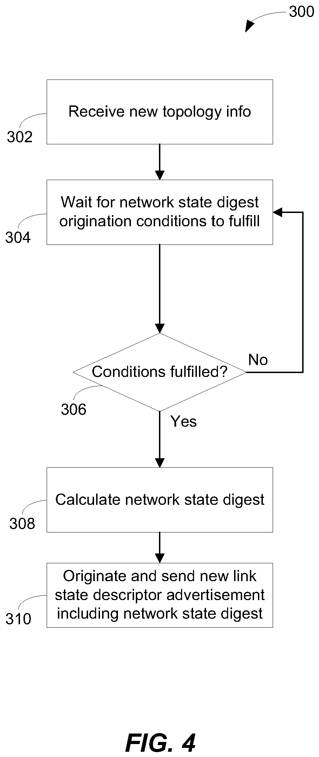

Fig. 4 illustrates an implementation of the method 200 of Fig. 2 in which new network topology information is received (block 302), and the switching node performing the method 200 waits for network state digest origination conditions to be fulfilled (block 304), such as the conditions described above. Once the conditions are fulfilled (block 306), a network digest is calculated (block 308) and is transmitted in a flooding message (e.g., a LSA) (block 310).

When conditions are implemented as described above, after origination of the network state digest, the link state messages (LSAs or LSPs) are propagated (flooded) as usual (i.e., no new mechanism is required).

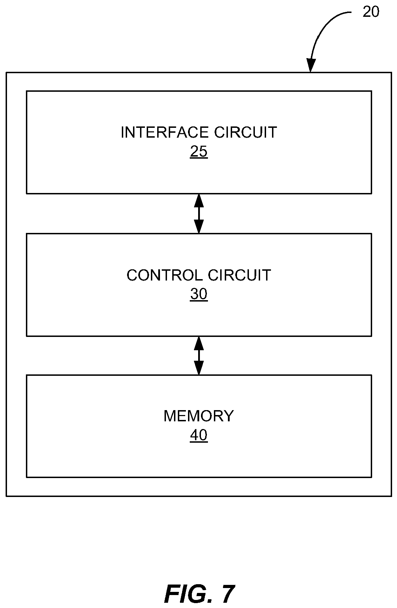

Fig. 7 illustrates the main functional elements in a network node 20 according to one exemplary embodiment. The network node 20 comprises an interface circuit 25, a control circuit 30, and memory 40. The interface circuit 25 connects the network node 20 to switching network 15. The interface circuit 25 may comprise, for example, an Ethernet interface or other IP-based interface. The control circuit 30 controls the operation of the network node 20 as previously described. The control circuit 30 may comprise one or more processors, microcontrollers, hardware circuits, firmware, or a combination thereof. The local memory 40 may comprise random access memory (RAM), read-only memory (ROM), Flash memory, or other type of memory. The local memory may also include internal memory such register files, L1 cache, L2 cache or other memory array in a microprocessor. The local memory 40 stores computer program code and data used by the network node 20 to perform the operations as described herein. The data stored by the local memory 40 includes, for example, the LSDB, routing tables, an Explicit Path Database (EPDB), FIB, FDB, and other data used for configuring paths and for routing data traffic.

The embodiments described above enable a network node (e.g., switching network node 20-1) or an external entity (e.g., control entity 20-2) to be aware of whether or not all network nodes possess an identical network state (e.g., topology). This allows an external entity and each network node to conclude that a transient convergence process is over after a change in the network state and the network is in stable state. For example, if the network digest is about topology, then it is known to every node and external entity when has the network converged to a new topology (i.e., the transient is over and the network is in a stable state again). If the nodes issue their digest after the installation of forwarding paths, then it is also know that the network is ready to forward data packets.

Advantageously, using one or more of the embodiments described above, a (possibly central) entity can be sure that a switching running a link-state routing protocol has finished converging into a new stable routing state. An entity that could make use of this information could be one or more entities external to the routing protocol, e.g. a PCE or a central controller (e.g., an SDN controller, an ABNO controller, etc.) as well as any network node that may conduct subsequent actions when the topology has become stable.

## Claims

1. A method (100) performed in a network node (20) for determining whether all of a plurality of network nodes (20-1) of an area of a communication network (10) utilizing a link state routing protocol have converged into a consistent routing state, the method comprising:
receiving (102), by the network node (20), a respective link state message originated by each of the plurality of network nodes (20-1) of the area of the communication network, wherein each respective link state message is flooded throughout the area of the communication network (10) and includes a network state digest indicating a perceived topology of the area of the communication network (10) from the perspective of the respective originating network node and wherein either one of following applies:
- each link state message is one a Link State Advertisement, LSA, or
- each link state message is a Link State Physical Data Unit, LSP; and
determining (104) whether all of the plurality of network nodes (20-1) of the area of the communication network (10) have converged into the consistent routing state based upon comparing each respective network state digest of each respective link state message and a network state digest generated by the network node.

2. The method of claim 1, wherein:
the link state routing protocol is Intermediate System to Intermediate System, IS-IS.

3. The method of claim 2, wherein the respective network state digest is carried within a Multi-Topology, MT, Capability Type Length Value, TLV, element of the respective link state message.

4. The method of claim 1, wherein:
the link state routing protocol is Open Shortest Path First, OSPF.

5. The method of any of claims 1 to 4, wherein:
- each respective network state digest is an Institute of Electrical and Electronics Engineers, IEEE, standard 802.1aq Computed Topology Digest; or
- each respective network state digest is based upon one or more of the respective link state messages; or
- each respective network state digest is based upon a number of edges in the perceived topology of the area of the communication network (10) of the respective originating network node.

6. The method of claim 1,
- wherein:
-- the communication network (10) comprises a switching network (15);
-- the plurality of network nodes (20-1) are switching nodes of the switching network (15); and
-- the network node (20) is one of a Path Computation Element and a network controller;
- or wherein:
- - the communication network (10) comprises a switching network (15); and
- - the network node (20) and the plurality of network nodes (20-1) are switching nodes of the switching network (15).

7. A computer-readable medium comprising code portions which, when executed on a processor, configure the processor to perform all steps of a method according to any one of the preceding method claims.

8. A network node (20) configured to determine whether all of a plurality of network nodes (20-1) of an area of a communication network (10) utilizing a link state routing protocol have converged into a consistent routing state, the network node (20) comprising:
an interface circuit (25) configured to communicatively couple the network node (20) to one or more of the plurality of network nodes (20-1) of the communication network (10);
a memory (40) configured to store a topology view of the area of the communication network (10) from the perspective of the network node (20); and
a control circuit (30) coupled to the interface circuit (25) and configured to:
- receive (102) a respective link state message originated by each of the plurality of network nodes (20-1), wherein each respective link state message is flooded throughout the area of the communication network (10) and includes a network state digest indicating a topology view of the area of the communication network (10) from the perspective of the respective originating network node and wherein either one of the following applies:
-- each link state message is a Link State Advertisement, LSA, or
-- each link state message is a Link State Physical Data Unit, LSP, and
- determine (104) whether all of the plurality of network nodes (20-1) of the area of the communication network (10) have converged into the consistent routing state based upon a comparison of each respective network state digest of each respective link state message with a network state digest generated by the network node (20) based upon the topology view stored by the memory (40).

9. The network node (20) of claim 8, wherein:
the link state routing protocol is Intermediate System to Intermediate System, IS-IS.

10. The network node (20) of claim 9, wherein the respective network state digest is carried within a Multi-Topology, MT, Capability Type Length Value, TLV, element of respective link state message.

11. The network node (20) of claim 8, wherein:
the link state routing protocol is Open Shortest Path First, OSPF.

12. The network node (20) of any of claims 8 to 11, wherein:
- each respective network state digest is an Institute of Electrical and Electronics Engineers, IEEE, standard 802.1aq Computed Topology Digest; or
- each respective network state digest is based upon one or more of the respective link state messages; or
- each respective network state digest is based upon a number of edges in the topology view of the area of the communication network (10) of the originating network node.

13. The network node (20) of claim 8, wherein:
the communication network (10) comprises a switching network (15);
the plurality of network nodes (20-1) are switching nodes of the switching network (15); and
the network node (20) is one of a Path Computation Element and a network controller.

14. The network node (20) of claim 8, wherein:
the communication network (10) comprises a switching network (15); and
the network node (20) and the plurality of network nodes (20-1) are switching nodes of the switching network (15).

15. The network node (20) of claim 14, wherein the control circuit (30) is further configured to:
responsive to a detection (202) of a topology change in the area of the switching network (15), transmit (204) the respective link state message to one or more adjacent network nodes of the plurality of network nodes (20-1) to thereby flood the respective link state message, wherein the respective link state message is generated by the network node (20), wherein each of the one or more adjacent network nodes will also flood the respective link state message by transmitting the respective link state message to at least some of its neighbor network nodes.

## Patentansprüche

1. Verfahren (100), das in einem Netzwerkknoten (20) durchgeführt wird, zum Bestimmen, ob alle einer Mehrzahl von Netzwerkknoten (20-1) eines Gebiets eines Kommunikationsnetzwerks (10), die ein Verbindungszustands-Routingprotokoll verwenden, gegen einen einheitlichen Routing-Zustand konvergiert haben, wobei das Verfahren umfasst:
Empfangen (102) durch den Netzwerkknoten (20) einer jeweiligen Verbindungszustandsnachricht, die von jedem der Mehrzahl von Netzwerkknoten (20-1) des Gebiets des Kommunikationsnetzwerks abgeht, wobei jede jeweilige Verbindungszustandsnachricht durch das ganze Gebiet des Kommunikationsnetzwerk (10) geflutet wird und eine Netzwerkzustandsübersicht umfasst, die eine wahrgenommene Topologie des Gebiets des Kommunikationsnetzwerks (10) aus der Perspektive des jeweiligen Ursprungs-Netzwerkknotens anzeigt, und wobei eines von Folgendem gilt:
- jede Verbindungszustandsnachricht ist eine Verbindungszustandsankündigung, LSA, oder
- jede Verbindungszustandsnachricht ist eine physikalische Verbindungszustandsdateneinheit LSP; und
Bestimmen (104), ob alle der Mehrzahl von Netzwerkknoten (20-1) des Gebiets des Kommunikationsnetzwerks (10) gegen den einheitlichen Routing-Zustand konvergiert haben, basierend auf einem Vergleichen jeder jeweiligen Netzwerkzustandsübersicht jeder jeweiligen Verbindungszustandsnachricht und einer durch den Netzwerkknoten generierten Netzwerkzustandsübersicht.

2. Verfahren nach Anspruch 1, wobei:
das Verbindungszustands-Routingprotokoll IS-IS (Intermediate System to Intermediate System) ist.

3. Verfahren nach Anspruch 2, wobei die jeweilige Netzwerkzustandsübersicht innerhalb eines Mehrfach-Topologie, MT,- Kapazitäts-Typlängenwert, TLV,-Elements der jeweiligen Verbindungszustandsnachricht übertragen wird.

4. Verfahren nach Anspruch 1, wobei:
das Verbindungszustands-Routingprotokoll OSPF (Open Shortest Path First) ist.

5. Verfahren nach einem der Ansprüche 1 bis 4, wobei:
- jede jeweilige Netzwerkzustandsübersicht eine Computed Topology Digest des IEEE (Institute of Electrical and Electronics Engineers)-Standards 802.1aq ist; oder
- jede jeweilige Netzwerkzustandsübersicht auf einer oder mehreren der jeweiligen Verbindungszustandsnachrichten basiert; oder
- jede jeweilige Netzwerkzustandsübersicht auf einer Anzahl von Kanten in der wahrgenommenen Topologie des Gebiets des Kommunikationsnetzwerks (10) des jeweiligen Ursprungs-Netzwerkknotens basiert.

6. Verfahren nach Anspruch 1,
- wobei:
-- das Kommunikationsnetzwerk (10) ein Vermittlungsnetzwerk (15) umfasst;
-- es sich bei der Mehrzahl von Netzwerkknoten (20-1) um Vermittlungsknoten des Vermittlungsnetzwerks (15) handelt; und
-- der Netzwerkknoten (20) eines von einem Pfadberechnungselement und einer Netzwerksteuerung ist;
- oder wobei:
-- das Kommunikationsnetzwerk (10) ein Vermittlungsnetzwerk (15) umfasst; und
-- es sich bei dem Netzwerkknoten (20) und der Mehrzahl von Netzwerkknoten (20-1) um Vermittlungsknoten des Vermittlungsnetzwerks (15) handelt.

7. Computerlesbares Medium, umfassend Codeabschnitte, die bei Ausführung auf einem Prozessor den Prozessor so konfigurieren, dass er alle Schritte eines Verfahrens nach einem der vorhergehenden Ansprüche ausführt.

8. Netzwerkknoten (20), der so konfiguriert ist, dass er bestimmt, ob alle einer Mehrzahl von Netzwerkknoten (20-1) eines Gebiets eines Kommunikationsnetzwerks, die ein Verbindungszustands-Routingprotokoll verwenden, gegen einen einheitlichen Routing-Zustand konvergiert haben, wobei der Netzwerkknoten (20) umfasst:
eine Schnittstellenschaltung (25), die so konfiguriert ist, dass sie den Netzwerkknoten (20) kommunikativ mit einem oder mehreren der Mehrzahl von Netzwerkknoten (20-1) des Kommunikationsnetzwerks (10) koppelt;
einen Speicher (40), der zum Speichern einer Topologieansicht des Gebiets des Kommunikationsnetzwerks (10) aus der Perspektive des Netzwerkknotens (20) konfiguriert ist; und
eine Steuerschaltung (30), die mit der Schnittstellenschaltung (25) gekoppelt und konfiguriert ist zum:
- Empfangen (102) einer jeweiligen Verbindungszustandsnachricht, die von jedem der Mehrzahl von Netzwerkknoten (20-1) abgeht, wobei jede jeweilige Verbindungszustandsnachricht durch das ganze Gebiet des Kommunikationsnetzwerk (10) geflutet wird und eine Netzwerkzustandsübersicht umfasst, die eine Topologieansicht des Gebiets des Kommunikationsnetzwerks (10) aus der Perspektive des jeweiligen Ursprungs-Netzwerkknotens anzeigt, und wobei eines von Folgendem gilt:
-- jede Verbindungszustandsnachricht ist eine Verbindungszustandsankündigung, LSA, oder
-- jede Verbindungszustandsnachricht ist eine physikalische Verbindungszustandsdateneinheit, LSP, und
- Bestimmen (104), ob alle der Mehrzahl von Netzwerkknoten (20-1) des Gebiets des Kommunikationsnetzwerks (10) gegen den einheitlichen Routing-Zustand konvergiert haben, basierend auf einem Vergleich jeder jeweiligen Netzwerkzustandsübersicht jeder jeweiligen Verbindungszustandsnachricht mit einer durch den Netzwerkknoten (20) basierend auf der vom Speicher (40) gespeicherten Topologieansicht generierten Netzwerkzustandsübersicht.

9. Netzwerkknoten (20) nach Anspruch 8, wobei:
das Verbindungszustands-Routingprotokoll IS-IS (Intermediate System to Intermediate System) ist.

10. Netzwerkknoten (20) nach Anspruch 9, wobei die jeweilige Netzwerkzustandsübersicht innerhalb eines Mehrfach-Topologie, MT,- Kapazitäts-Typlängenwert, TLV,-Elements der jeweiligen Verbindungszustandsnachricht übertragen wird.

11. Netzwerkknoten (20) nach Anspruch 8, wobei:
das Verbindungszustands-Routingprotokoll OSPF (Open Shortest Path First) ist.

12. Netzwerkknoten (20) nach einem der Ansprüche 8 bis 11, wobei:
- jede jeweilige Netzwerkzustandsübersicht eine Computed Topology Digest des IEEE (Institute of Electrical and Electronics Engineers)-Standards 802.1aq ist; oder
- jede jeweilige Netzwerkzustandsübersicht auf einer oder mehreren der jeweiligen Verbindungszustandsnachrichten basiert; oder
- jede jeweilige Netzwerkzustandsübersicht auf einer Anzahl von Kanten in der Topologieansicht des Gebiets des Kommunikationsnetzwerks (10) des Ursprungs-Netzwerkknotens basiert.

13. Netzwerkknoten (20) nach Anspruch 8, wobei:
das Kommunikationsnetzwerk (10) ein Vermittlungsnetzwerk (15) umfasst;
es sich bei der Mehrzahl von Netzwerkknoten (20-1) um Vermittlungsknoten des Vermittlungsnetzwerks (15) handelt; und
der Netzwerkknoten (20) eines von einem Pfadberechnungselement und einer Netzwerksteuerung ist.

14. Netzwerkknoten (20) nach Anspruch 8, wobei:
das Kommunikationsnetzwerk (10) ein Vermittlungsnetzwerk (15) umfasst; und
es sich bei dem Netzwerkknoten (20) und der Mehrzahl von Netzwerkknoten (20-1) um Vermittlungsknoten des Vermittlungsnetzwerks (15) handelt.

15. Netzwerkknoten (20) nach Anspruch 14, wobei die Steuerschaltung (30) ferner konfiguriert ist zum:
Senden (204) in Reaktion auf eine Erkennung (202) einer Topologieänderung im Gebiet des Vermittlungsnetzwerks (15) der jeweiligen Verbindungszustandsnachricht an einen oder mehrere benachbarte Netzwerkknoten der Mehrzahl von Netzwerkknoten (20-1), um dadurch die jeweilige Verbindungszustandsnachricht zu fluten, wobei die jeweilige Verbindungszustandsnachricht durch den Netzwerkknoten (20) generiert wird, wobei jeder des einen oder der mehreren benachbarten Netzwerkknoten die jeweilige Verbindungszustandsnachricht durch Senden der jeweiligen Verbindungszustandsnachricht an wenigstens einige der benachbarten Netzwerkknoten ebenfalls flutet.

## Revendications

1. Procédé (100) effectué dans un noeud de réseau (20) pour déterminer si l'intégralité d'une pluralité de noeuds de réseau (20-1) d'une zone d'un réseau de communication (10) utilisant un protocole d'acheminement d'état de liaison ont convergé dans un état d'acheminement cohérent, le procédé comprenant :
la réception (102), par le noeud de réseau (20), d'un message d'état de liaison respectif initié par chacun de la pluralité de noeuds de réseau (20-1) de la zone du réseau de communication, dans lequel chaque message d'état de liaison respectif est inondé dans toute la zone du réseau de communication (10) et comprend une synthèse d'état de réseau indiquant une topologie perçue de la zone du réseau de communication (10) depuis la perspective du noeud de réseau d'origine respectif et dans lequel l'un de ce qui suit s'applique :
- chaque message d'état de liaison est une annonce d'état de liaison, LSA, ou
- chaque message d'état de liaison est une unité de données physique d'état de liaison, LSP ; et
la détermination (104) si l'intégralité de la pluralité de noeuds de réseau (20-1) de la zone du réseau de communication (10) ont convergé dans l'état d'acheminement cohérent sur la base de la comparaison de chaque synthèse d'état de réseau respective de chaque message d'état de liaison respectif et d'une synthèse d'état de réseau générée par le noeud de réseau.

2. Procédé selon la revendication 1, dans lequel :
le protocole d'acheminement d'état de liaison est système intermédiaire à système intermédiaire, IS-IS.

3. Procédé selon la revendication 2, dans lequel la synthèse d'état de réseau respective est portée à l'intérieur d'un élément type longueur valeur, TLV, de capacité de topologies multiples, MT, du message d'état de liaison respectif.

4. Procédé selon la revendication 1, dans lequel :
le protocole d'acheminement d'état de liaison est chemin le plus court ouvert en premier, OSPF.

5. Procédé selon l'une quelconque des revendications 1 à 4, dans lequel :
- chaque synthèse d'état de réseau respective est une synthèse de topologie calculée de la norme Institute of Electrical and Electronics Engineers, IEEE, 802.1aq ; ou
- chaque synthèse d'état de réseau respective est basée sur un ou plusieurs des messages d'état de liaison respectifs ; ou
- chaque synthèse d'état de réseau respective est basée sur un nombre de bords dans la topologie reçue de la zone du réseau de communication (10) du noeud de réseau d'origine respectif.

6. Procédé selon la revendication 1,
- dans lequel :
-- le réseau de communication (10) comprend un réseau de commutation (15) ;
-- la pluralité de noeuds de réseau (20-1) sont des noeuds de commutation du réseau de commutation (15) ; et
-- le noeud de réseau (20) est l'un d'un élément de calcul d'itinéraire et d'un organe de commande de réseau ;
- ou dans lequel :
-- le réseau de communication (10) comprend un réseau de commutation (15) ; et
-- le noeud de réseau (20) et la pluralité de noeuds de réseau (20-1) sont des noeuds de commutation du réseau de commutation (15).

7. Support lisible par ordinateur comprenant des portions de code qui, lorsqu'elles sont exécutées sur un processeur, configurent le processeur pour effectuer toutes les étapes d'un procédé selon l'une quelconque des revendications de procédé précédentes.

8. Noeud de réseau (20) configuré pour déterminer si l'intégralité d'une pluralité de noeuds de réseau (20-1) d'une zone d'un réseau de communication (10) utilisant un protocole d'acheminement d'état de liaison ont convergé dans un état d'acheminement cohérent, le noeud de réseau (20) comprenant :
un circuit d'interface (25) configuré pour coupler, de manière à pouvoir communiquer, le noeud de réseau (20) à un ou plusieurs de la pluralité de noeuds de réseau (20-1) du réseau de communication (10) ;
une mémoire (40) configurée pour mémoriser une vue de topologie de la zone du réseau de communication (10) depuis la perspective du noeud de réseau (20) ; et
un circuit de commande (30) couplé au circuit d'interface (25) et configuré pour effectuer :
- la réception (102) d'un message d'état de liaison respectif initié par chacun de la pluralité de noeuds de réseau (20-1), dans lequel chaque message d'état de liaison respectif est inondé dans toute la zone du réseau de communication (10) et comprend une synthèse d'état de réseau indiquant une vue de topologie de la zone du réseau de communication (10) depuis la perspective du noeud de réseau d'origine respectif et dans lequel l'un de ce qui suit s'applique :
-- chaque message d'état de liaison est une annonce d'état de liaison, LSA, ou
-- chaque message d'état de liaison est une unité de données physique d'état de liaison, LSP, et
- la détermination (104) si l'intégralité de la pluralité de noeuds de réseau (20-1) de la zone du réseau de communication (10) ont convergé dans l'état d'acheminement cohérent sur la base d'une comparaison de chaque synthèse d'état de réseau respective de chaque message d'état de liaison respectif et d'une synthèse d'état de réseau générée par le noeud de réseau (20) sur la base de la vue de topologie mémorisée dans la mémoire (40) .

9. Noeud de réseau (20) selon la revendication 8, dans lequel :
le protocole d'acheminement d'état de liaison est système intermédiaire à système intermédiaire, IS-IS.

10. Noeud de réseau (20) selon la revendication 9, dans lequel la synthèse d'état de réseau respective est portée à l'intérieur d'un élément type longueur valeur, TLV, de capacité de topologies multiples, MT, du message d'état de liaison respectif.

11. Noeud de réseau (20) selon la revendication 8, dans lequel :
le protocole d'acheminement d'état de liaison est chemin le plus court ouvert en premier, OSPF.

12. Noeud de réseau (20) selon l'une quelconque des revendications 8 à 11, dans lequel :
- chaque synthèse d'état de réseau respective est une synthèse de topologie calculée de la norme Institute of Electrical and Electronics Engineers, IEEE, 802.1aq ; ou
- chaque synthèse d'état de réseau respective est basée sur un ou plusieurs des messages d'état de liaison respectifs ; ou
- chaque synthèse d'état de réseau respective est basée sur un nombre de bords dans la vue de topologie de la zone du réseau de communication (10) du noeud de réseau d'origine.

13. Noeud de réseau (20) selon la revendication 8, dans lequel :
le réseau de communication (10) comprend un réseau de commutation (15) ;
la pluralité de noeuds de réseau (20-1) sont des noeuds de commutation du réseau de commutation (15) ; et
le noeud de réseau (20) est l'un d'un élément de calcul d'itinéraire et d'un organe de commande de réseau.

14. Noeud de réseau (20) selon la revendication 8, dans lequel :
le réseau de communication (10) comprend un réseau de commutation (15) ; et
le noeud de réseau (20) et la pluralité de noeuds de réseau (20-1) sont des noeuds de commutation du réseau de commutation (15).

15. Noeud de réseau (20) selon la revendication 14, dans lequel le circuit de commande (30) est en outre configuré pour effectuer :
en réponse à une détection (202) d'un changement de topologie dans la zone du réseau de commutation (15), la transmission (204) du message d'état de liaison respectif à destination d'un ou plusieurs noeuds de réseau adjacents de la pluralité de noeuds de réseau (20-1) pour inonder de ce fait le message d'état de liaison respectif, dans lequel le message d'état de liaison respectif est généré par le noeud de réseau (20), dans lequel chacun de l'un ou plusieurs noeuds de réseau adjacents inonde également le message d'état de liaison respectif par la transmission du message d'état de liaison respectif à destination d'au moins certains de ses noeuds de réseau voisins.
